# EUROPEAN PATENT APPLICATION

(11) **EP 2 018 037 A1**
(43) Date of publication of application: **21.01.2009**
(21) Application number: 08160518.0
(22) Date of filing: 16.07.2008
(51) Int. Cl.: H04N 1/00

(54) **Image forming apparatus, image carrier, and process cartridge**

(30) Priority: 19.07.2007 JP 2007188866
(71) Applicant: Ricoh Company, Ltd., Tokyo 143-8555 (JP)
(72) Inventor: Kuwabara, Nobuo, Tokyo 143-8555 (JP); Satoh, Masahiko, Tokyo 143-8555 (JP); Kimura, Noriyuki, Tokyo 143-8555 (JP); Hori, Eisuke, Tokyo 143-8555 (JP); Kimura, Hideki, Tokyo 143-8555 (JP); Nagashima, Hiroyuki, Tokyo 143-8555 (JP); Ono, Hiroshi, Tokyo 143-8555 (JP); Shakuto, Masahiko, Tokyo 143-8555 (JP)
(74) Representative: Schwabe - Sandmair - Marx

(57) **Abstract**

An image forming apparatus (100) includes a unit (10Y), a mark detector (103Y), and a controller (200). The unit is attachable to and detachable from the image forming apparatus and includes an information mark pattern (102Y) indicating predetermined information. The mark detector detects the information mark pattern. The controller obtains the information indicated by the information mark pattern based on a detection result provided by the mark detector.

## Description

### BACKGROUND OF THE INVENTION

### Field of the Invention

Exemplary aspects of the present invention relate to an image forming apparatus, an image carrier, and a process cartridge, and more particularly, to an image forming apparatus, an image carrier, and a process cartridge including an information mark pattern.

### Discussion of the Background

A related-art image forming apparatus, such as a copier, a facsimile machine, a printer, or a multifunction printer having at least one of copying, printing, scanning, and facsimile functions, typically forms a toner image on a recording medium (e.g., a transfer sheet) based on image data using electrophotography. Thus, for example, a charger charges a surface of an image carrier. An optical writer emits a light beam onto the charged surface of the image carrier to form an electrostatic latent image on the image carrier according to the image data. A development device develops the electrostatic latent image with a developer (e.g., toner) to form a toner image on the image carrier. The toner image is then transferred from the image carrier onto a transfer sheet. A cleaner cleans the surface of the image carrier after the toner image is transferred from the image carrier. Finally, a fixing device applies heat and pressure to the transfer sheet bearing the toner image to fix the toner image on the transfer sheet, thus forming the toner image on the transfer sheet.

In such an image forming apparatus, the image carrier, the charger, the development device, and the cleaner may be integrated into a single unit as a process cartridge attachable to and detachable from the image forming apparatus, so that the process cartridge may be easily replaced with new one.

The process cartridge may include a nonvolatile memory, such as an IC tag, for storing information on the properties and the manufacture of the image carrier. After a new process cartridge is installed in the image forming apparatus, a controller communicates with a communication device in the image forming apparatus to read the information on the properties and the manufacture of the image carrier stored in the nonvolatile memory of the process cartridge. Then, the controller changes an image forming condition, such as a development bias, based on the read information. However, such a nonvolatile memory is expensive, resulting in increased manufacturing costs of the process cartridge.

Obviously, such increased manufacturing costs of the process cartridge are undesirable, and accordingly, there is a need for a technology to assign information to and obtain information from the process cartridge at decreased cost.

### SUMMRRY OF THE INVENTION

This specification describes below an image forming apparatus according to an exemplary embodiment of the present invention. In one exemplary embodiment of the present invention, the image forming apparatus includes a unit, a mark detector, and a controller. The unit is attachable to and detachable from the image forming apparatus and includes an information mark pattern indicating predetermined information. The mark detector is configured to detect the information mark pattern. The controller is configured to obtain the information indicated by the information mark pattern based on a detection result provided by the mark detector.

This specification further describes below an image carrier according to an exemplary embodiment of the present invention. In one exemplary embodiment of the present invention, the image carrier is attachable to and detachable from an image forming apparatus. The image carrier bears an information mark pattern indicating predetermined information to be detected by a mark detector provided in the image forming apparatus.

This specification further describes below a process cartridge according to an exemplary embodiment of the present invention. In one exemplary embodiment of the present invention, the process cartridge is attachable to and detachable from an image forming apparatus, and includes at least one of an image carrier, a charger, a development device, and a cleaner. The image carrier is configured to carry an electrostatic latent image. The charger is configured to uniformly charge the image carrier. The development device is configured to develop the electrostatic latent image formed on the image carrier with toner. The cleaner is configured to remove residual toner remaining on the image carrier. The process cartridge further includes an information mark pattern indicating predetermined information to be detected by a mark detector provided in the image forming apparatus.

### BRIEF DESCRIPTION OF THE DRAWINGS

A more complete appreciation of the invention and the many attendant advantages thereof will be readily obtained as the same becomes better understood by reference to the following detailed description when considered in connection with the accompanying drawings, wherein:
FIG. 1 is a schematic view of an image forming apparatus according to an exemplary embodiment of the present invention;
FIG. 2 is a sectional view of a process cartridge included in the image forming apparatus shown in FIG. 1;
FIG. 3 is a perspective view of the process cartridge shown in FIG. 2;
FIG. 4 is a perspective view of a process cartridge according to another exemplary embodiment;
FIG. 5A is a perspective view of a process cartridge including an information mark pattern for yellow color according to yet another exemplary embodiment;
FIG. 5B is a perspective view of a process cartridge including an information mark pattern for magenta color according to yet another exemplary embodiment;
FIG. 6 is a flowchart illustrating processes for replacing the process cartridge shown in FIG. 3;
FIG. 7 is a sectional view of a process cartridge according to yet another exemplary embodiment; and
FIG. 8 is a perspective view of the process cartridge shown in FIG. 7.

### DETAILED DESCRIPTION OF THE INVENTION

In describing exemplary embodiments illustrated in the drawings, specific terminology is employed for the sake of clarity. However, the disclosure of this specification is not intended to be limited to the specific terminology so selected and it is to be understood that each specific element includes all technical equivalents that operate in a similar manner.

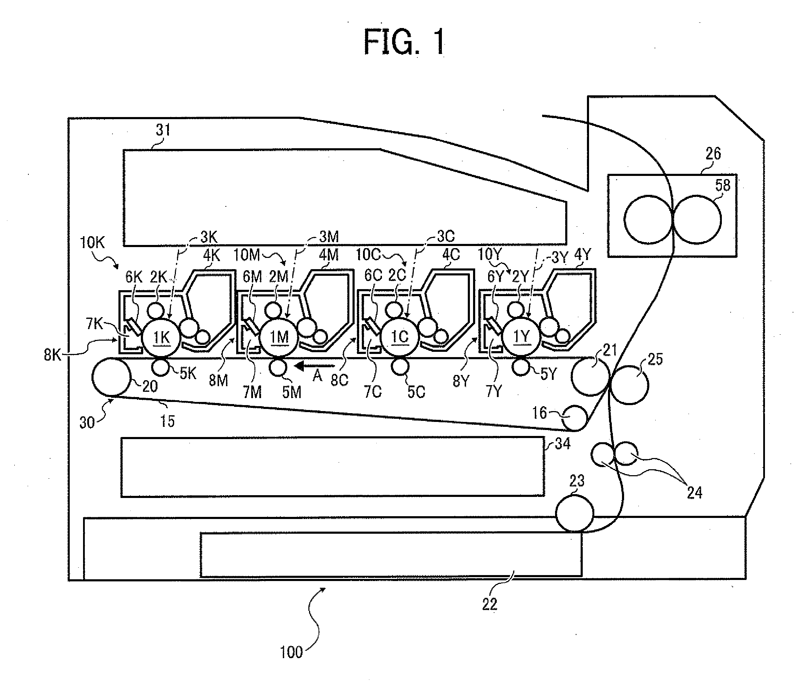

Referring now to the drawings, wherein like reference numerals designate identical or corresponding parts throughout the several views, in particular to FIG. 1, an image forming apparatus 100 according to an exemplary embodiment of the present invention is explained.

As illustrated in FIG. 1, the image forming apparatus 100 includes process cartridges 10Y, 10C, 10M, and 10K, an exposure device 31, a transfer unit 30, a feeding roller 23, a registration roller pair 24, a second transfer bias roller 25, a fixing device 26, and a waste toner container 34.

The process cartridges 10Y, 10C, 10M, and 10K include photoconductors 1Y, 1C, 1M, and 1K, chargers 2Y, 2C, 2M, and 2K, development devices 4Y, 4C, 4M, and 4K, and cleaners 8Y, 8C, 8M, and 8K, respectively. The cleaners 8Y, 8C, 8M, and 8K include cleaning blades 6Y, 6C, 6M, and 6K and waste toner collectors 7Y, 7C, 7M, and 7K, respectively.

The transfer unit 30 includes an intermediate transfer belt 15, a tension roller 20, first transfer bias rollers 5Y, 5C, 5M, and 5K, a second transfer roller 21, and a driven roller 16. The fixing device 26 includes a fixing roller 58.

The image forming apparatus 100 can be a copier, a facsimile machine, a printer, a plotter, a multifunction printer having at least one of copying, printing, scanning, plotter, and facsimile functions, or the like. According to this non-limiting exemplary embodiment of the present invention, the image forming apparatus 100 functions as a printer for forming an image on a recording medium by electrophotography. For example, the image forming apparatus 100 may be a tandem type printer including four photoconductors 1Y, 1C, 1M, and 1K serving as image carriers.

The process cartridges 10Y, 10C, 10M, and 10K are provided above the intermediate transfer belt 15 and form yellow, cyan, magenta, and black toner images with yellow, cyan, magenta, and black toners, respectively. The process cartridges 10Y, 10C, 10M, and 10K use toners in colors different from each other, to form the yellow, cyan, magenta, and black toner images, respectively, but have a common structure. When the process cartridges 10Y, 10C, 10M, and 10K consume the yellow, cyan, magenta, and black toners or come to the end of their life, the process cartridges 10Y, 10C, 10M, and 10K are replaced with new ones.

The photoconductors 1Y, 1C, 1M, and 1K (e.g., photoconductive drums) serve as image carriers. Rotary shafts of the photoconductors 1Y, 1C, 1M, and 1K extend in a horizontal direction on lines (e.g., normal lines) connecting a front side of the image forming apparatus 100 to a rear side of the image forming apparatus 100 in such a manner that the rotary shafts are provided in parallel to each other on a horizontal plane.

The chargers 2Y, 2C, 2M, and 2K face and uniformly charge outer circumferential surfaces of the photoconductors 1Y, 1C, 1M, and 1K, respectively. The chargers 2Y, 2C, 2M, and 2K include charging rollers (not shown) contacting the outer circumferential surfaces of the photoconductors 1Y, 1C, 1M, and 1K and rotating in accordance with rotation of the photoconductors 1Y, 1C, 1M, and 1K, respectively. Thus, the chargers 2Y, 2C, 2M, and 2K charge the photoconductors 1Y, 1C, 1M, and 1K, respectively, in a contact method. However, the chargers 2Y, 2C, 2M, an 2K may charge the photoconductors 1Y, 1C, 1M, and 1K in a non-contact method without contacting the photoconductors 1Y, 1C, 1M, and 1K, respectively.

The exposure device 31 is provided above the photoconductors 1Y, 1C, 1M, and 1K and forms electrostatic latent images on the photoconductors 1Y, 1C, 1M, and 1K, respectively. For example, the exposure device 31 emits lights 3Y, 3C, 3M, and 3K onto the photoconductors 1Y, 1C, 1M, and 1K according to image data to form electrostatic latent images corresponding to yellow, cyan, magenta, and black image data, respectively. The exposure device 31 may be a laser beam scanner using a laser diode, for example.

The development devices 4Y, 4C, 4M, and 4K face the outer circumferential surfaces of the photoconductors 1Y, 1C, 1M, and 1K and develop the electrostatic latent images formed on the photoconductors 1Y, 1C, 1M, and 1K, respectively. For example, the development devices 4Y, 4C, 4M, and 4K include development rollers (not shown) serving as developer carriers for carrying a developer, respectively. A high voltage power source (not shown) applies a predetermined development bias to the development rollers so as to move yellow, cyan, magenta, and black toners contained in the developer carried by the development rollers to the electrostatic latent images formed on the photoconductors 1Y, 1C, 1M, and 1K, respectively. When the yellow, cyan, magenta, and black toners are adhered to the electrostatic latent images, yellow, cyan, magenta, and black toner images are formed on the photoconductors 1Y, 1C, 1M, and 1K, respectively. Each of the development devices 4Y, 4C, 4M, and 4K contains a one-component developer in an amount of 180 g in a default state.

The transfer unit 30 is provided under the process cartridges 10Y, 10C, 10M, and 10K and serves as a transfer belt unit including the intermediate transfer belt 15 having an endless belt shape.

The yellow; cyan, magenta, and black toner images formed on the photoconductors 1Y, 1C, 1M, and 1K, respectively, are first-transferred and superimposed onto the intermediate transfer belt 15 serving as an intermediate transfer member. The intermediate transfer belt 15 is looped over a plurality of rollers, such as the second transfer roller 21 serving as a second transfer member, the first transfer bias rollers 5Y, 5C, 5M, and 5K serving as first transfer members, the tension roller 20, and the driven roller 16. According to this exemplary embodiment, a rotation driving force is transmitted from a driving source (not shown) serving as a driver to the second transfer roller 21 to rotate the second transfer roller 21. The rotating second transfer roller 21 rotates the intermediate transfer belt 15 in a rotating direction A. Namely, according to this exemplary embodiment, the second transfer roller 21 serves as a driving roller for driving the intermediate transfer belt 15. However, other roller may serve as a driving roller for driving the intermediate transfer belt 15.

The cleaners 8Y, 8C, 8M, and 8K face the outer circumferential surfaces of the photoconductors 1Y, 1C, 1M, and 1K, respectively, and serve as image carrier cleaners for removing residual toners remaining on the photoconductors 1Y, 1C, 1M, and 1K after the yellow, cyan, magenta, and black toner images formed on the photoconductors 1Y, 1C, 1M, and 1K, respectively, are first-transferred onto the intermediate transfer belt 15. The cleaning blades 6Y, 6C, 6M, and 6K serve as removers for contacting the outer circumferential surfaces of the photoconductors 1Y, 1C, 1M, and 1K and scraping and removing residual toners remaining on the photoconductors 1Y, 1C, 1M, and 1K, respectively. The waste toner collectors 7Y, 7C, 7M, and 7K collect the removed toners, respectively.

The feeding roller 23 feeds a transfer sheet 22 serving as a recording medium toward the registration roller pair 24.

The second transfer roller 21 opposes the second transfer bias roller 25 to form a second transfer area between the second transfer roller 21 and the second transfer bias roller 25 via the intermediate transfer belt 15. The registration roller pair 24 feeds the transfer sheet 22 to the second transfer area at a time when a leading edge of the yellow, cyan, magenta, and black toner images superimposed on the intermediate transfer belt 15 reaches the second transfer area. When a high-voltage power source (not shown) applies a predetermined second transfer bias to the second transfer bias roller 25, the second transfer bias roller 25 second-transfers the yellow, cyan, magenta, and black toner images superimposed on the intermediate transfer belt 15 onto the transfer sheet 22 conveyed to the second transfer area. Accordingly, a color toner image is formed on the transfer sheet 22.

A curvature of the second transfer roller 21 separates the transfer sheet 22 bearing the color toner image from the intermediate transfer belt 15. In the fixing device 26, the fixing roller 58 fixes the color toner image on the transfer sheet 22 and outputs the transfer sheet 22 onto an outside of the image forming apparatus 100.

After the yellow, cyan, magenta, and black toner images superimposed on the intermediate transfer belt 15 are second-transferred onto the transfer sheet 22, a belt cleaner (not shown) removes residual toner remaining on the intermediate transfer belt 15. The removed toner is conveyed to the waste toner container 34 via a toner conveyance path (not shown) and stored in the waste toner container 34.

The image forming apparatus 100 may provide a unicolor mode for forming a yellow, cyan, magenta, or black toner image, a bicolor mode for forming a toner image by superimposing any two of yellow, cyan, magenta, and black toner images, a tricolor mode for forming a toner image by superimposing any three of yellow, cyan, magenta, and black toner images, and a full-color mode for forming a full-color toner image by superimposing yellow, cyan, magenta, and black toner images. A user of the image forming apparatus 100 may select the unicolor mode, the bicolor mode, the tricolor mode, or the full-color mode by operating a control panel (not shown).

The intermediate transfer belt 15, the tension roller 20, the first transfer bias rollers 5Y, 5C, 5M, and 5K, the second transfer roller 21, the driven roller 16, and the belt cleaner are integrated into the transfer unit 30. The transfer unit 30 is attachable to and detachable from the image forming apparatus 100 so that the user may easily replace consumables included in the transfer unit 30 at a time. Alternatively, the second transfer bias roller 25 may also be integrated into the transfer unit 30 attachable to and detachable from the image forming apparatus 100.

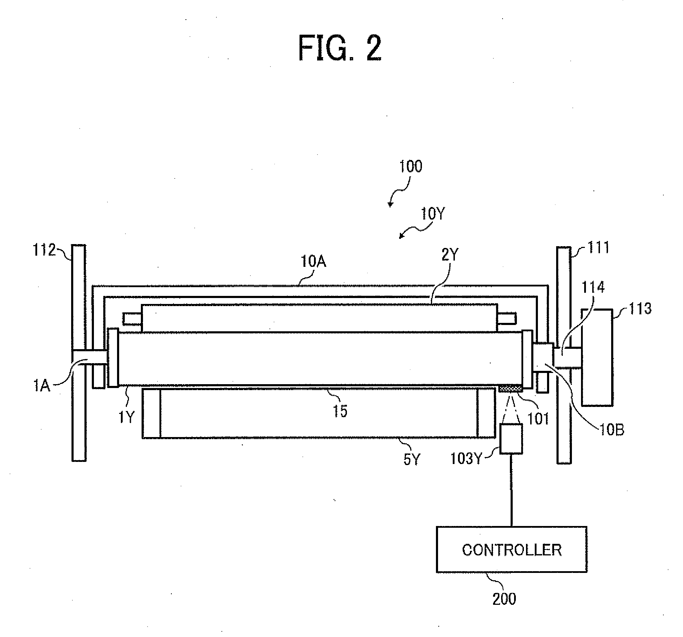

FIG. 2 is a sectional view of the process cartridge 10Y. Referring to FIG. 2, the following describes a structure of the process cartridge 10Y. Since the structure of the process cartridge 10Y is common to the process cartridges 10C, 10M, and 10K (depicted in FIG. 1), descriptions of the process cartridges 10C, 10M, and 10K are omitted.

The image forming apparatus 100 further includes a front side plate 112, a rear side plate 111, a driving gear 113, a driving shaft 114, an optical sensor 103Y, and a controller 200. The process cartridge 10Y further includes a frame 10A, a photoconductor shaft 1A, a joint 10B, and a reference mark 101.

The frame 10A rotatably supports a front end (i.e., a left end in FIG. 2) of the photoconductor shaft 1A via a bearing (not shown). The front side plate 112 is provided in a front side of the image forming apparatus 100. The front end of the photoconductor shaft 1A penetrates the frame 10A and is inserted into a positioning hole provided in the front side plate 112, so that the photoconductor shaft 1A is positioned with respect to the image forming apparatus 100.

The joint 10B is attached to a rear end (i.e., a right end in FIG. 2) of the photoconductor shaft 1A and is rotatably supported by the frame 10A.

A driver (not shown), including a driving motor (not shown), is attached to the rear side plate 111 provided in a rear side of the image forming apparatus 100. A driving force generated by the driving motor is transmitted to the driving gear 113 attached to the driving shaft 114. The driving shaft 114 penetrates the rear side plate 111. One end of the driving shaft 114 engages with the joint 10B.

The reference mark 101 is provided on the photoconductor 1Y. The optical sensor 103Y is provided near a rear end (i.e., a right end in FIG. 2) of the photoconductor 1Y, and detects the reference mark 101 to output a detection signal. The controller 200 detects the detection signal.

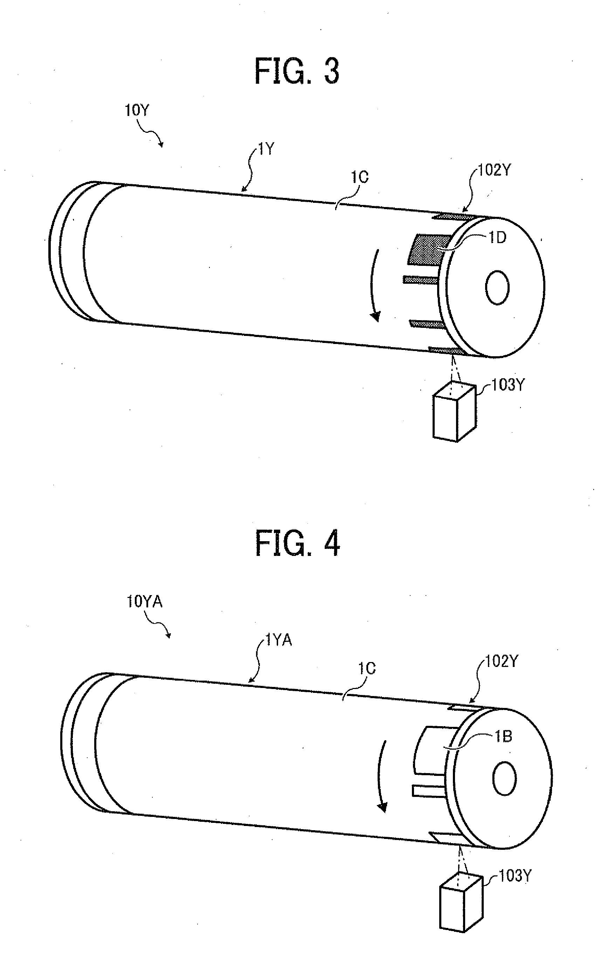

FIG. 3 is a perspective view of the process cartridge 10Y. The process cartridge 10Y further includes an information mark pattern 102Y. The photoconductor 1Y includes a photoconductive layer 1C and a coated portion 1D.

The photoconductor 1Y serves as a rotating member. The information mark pattern 102Y is formed on a non-image area, in which an electrostatic latent image and a toner image are not formed, provided in one circumferential end of the photoconductor 1Y in an axial direction of the photoconductor 1Y. The information mark pattern 102Y indicates predetermined information.

The optical sensor 103Y serves as a mark detector for detecting the information mark pattern 102Y. The optical sensor 103Y includes a light emitter (not shown), such as a light-emitting diode, and a light receiver (not shown), such as a photo sensor (e.g., a photo transistor). The light emitter emits light onto a predetermined position on the photoconductor 1Y. The light receiver detects an amount of light reflected by the photoconductor 1Y and outputs a detection result, that is, a detection signal as a direct current voltage. According to this exemplary embodiment, the light receiver detects a regular reflection light.

The controller 200 (depicted in FIG. 2) detects the detection signal output by the optical sensor 103Y and performs processing described below. For example, the controller 200 performs process control of the whole image forming apparatus 100 (depicted in FIG. 1), and includes a CPU (central processing unit) serving as an arithmetic unit, and a ROM (read-only memory) and a RAM (random access memory) serving as memories.

The photoconductor 1Y includes the photoconductive layer 1C as a surface layer. A coating having a reflectance different from a reflectance of the photoconductive layer 1C is applied in a detection area on the surface of the photoconductor 1Y detected by the optical sensor 103Y so as to form the coated portion 1D. Thus, the photoconductive layer 1C and the coated portion 1D form the information mark pattern 102Y on the surface of the photoconductor 1Y. According to this exemplary embodiment, the light receiver of the optical sensor 103Y hardly detects light reflected by the coated portion 1D of the photoconductor 1Y. Therefore, the light receiver of the optical sensor 103Y outputs a detection signal indicating an amount of light reflected by the coated portion 1D, which is smaller than an amount of light reflected by the photoconductive layer 1C.

FIG. 4 is a perspective view of a process cartridge 10YA according to another exemplary embodiment. The process cartridge 10YA includes a photoconductor 1YA. The photoconductor 1YA includes a base pipe 1B instead of the coated portion 1D (depicted in FIG. 3). The other elements of the process cartridge 10YA are common to the process cartridge 10Y depicted in FIG. 3.

The information mark pattern 102Y may be formed by applying a coating to the surface of the photoconductor 1Y as illustrated in FIG. 3. Alternatively, the base pipe 1B not having the photoconductive layer 1C and the photoconductive layer 1C may form the information mark pattern 102Y as illustrated in FIG. 4. A surface of the base pipe 1B is rougher than a surface of the photoconductive layer 1C. Therefore, the base pipe 1B diffuses most of light irradiating the base pipe 1B and thereby a small amount of light enters the light receiver of the optical sensor 103Y. Consequently, an amount of light reflected by the base pipe 1B and detected by the light receiver of the optical sensor 103Y is smaller than an amount of light reflected by the photoconductive layer 1C and detected by the light receiver of the optical sensor 103Y.

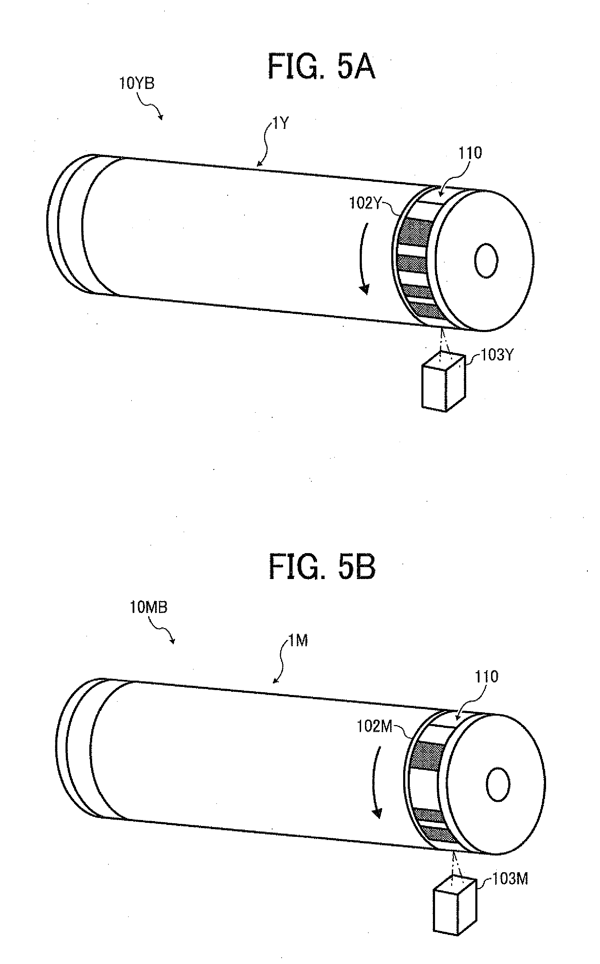

FIG. 5A is a perspective view of a process cartridge 10YB according to yet another exemplary embodiment. The process cartridge 10YB includes a label 110 instead of the coated portion 1D (depicted in FIG. 3). The other elements of the process cartridge 10YB are common to the process cartridge 10Y depicted in FIG. 3.

The label 110 includes a pattern having a reflectance different from a reflectance of the photoconductive layer 1C (depicted in FIG. 3), and is adhered to a non-image area in one outer circumferential end of the photoconductor 1Y in the axial direction of the photoconductor 1Y, so as to form the information mark pattern 102Y.

FIG. 5B is a perspective view of a process cartridge 10MB and an optical sensor 103M according to yet another exemplary embodiment. The process cartridge 10MB includes the photoconductor 1M, the label 110, and an information mark pattern 102M.

The information mark pattern 102Y adhered to the photoconductor 1Y (depicted in FIG. 5A) is different from the information mark pattern 102M adhered to the photoconductor 1M. For example, the information mark pattern 102Y indicates that the photoconductor 1Y forms a yellow toner image and the information mark pattern 102M indicates that the photoconductor 1M forms a magenta toner image. Thus, if the process cartridge 10MB including the photoconductor 1M is erroneously set in a location where the process cartridge 10YB (depicted in FIG. 5A) should be set, the controller 200 (depicted in FIG. 2) may identify the erroneous set when the optical sensor 103Y (depicted in FIG. 5A) detects the information mark pattern 102M.

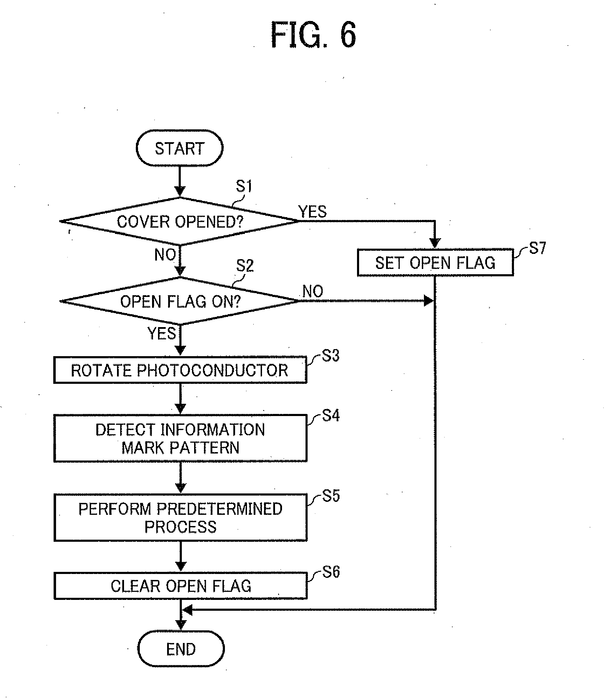

FIG. 6 is a flowchart illustrating processes for replacing the process cartridges 10Y, 10C, 10M, and 10K (depicted in FIG. 1), the process cartridge 10YA (depicted in FIG. 4), the process cartridge 10YB (depicted in FIG. 5A), and the process cartridge 10MB (depicted in FIG. 5B). Referring to FIG. 6, the following describes processes for replacing the process cartridge 10Y, for example.

In step S1, the controller 200 (depicted in FIG. 2) checks whether or not a cover of the image forming apparatus 100 (depicted in FIG. 1) is opened. When the cover is opened (i.e., if YES is selected in step S1), the controller 200 sets an open flag in step S7. When the cover is not opened (i.e., if NO is selected in step S1), the controller 200 checks whether or not an open flag is on in step S2. When the open flag is on (i.e., if YES is selected in step S2), the controller 200 rotates the photoconductor 1Y (depicted in FIG. 3) at a constant speed in step S3, because the process cartridge 10Y may have been replaced. In step S4, the optical sensor 103Y (depicted in FIG. 3) detects the information mark pattern 102Y (depicted in FIG. 3) formed on the outer circumferential surface of the photoconductor 1Y in step S4. The controller 200 obtains information of the information mark pattern 102Y based on a number of detection signals output by the optical sensor 103Y, an interval between detection signals, a time when the optical sensor 103Y outputs a detection signal, a strength of a detection signal, and/or the like. Information assigned to the information mark pattern 102Y includes property information and manufacturing information of the photoconductor 1Y, property information of the charger 2Y (depicted in FIG. 1) included in the process cartridge 10Y, and color of toner contained in the development device 4Y (depicted in FIG. 1).

In step S5, the controller 200 performs a predetermined process based on the obtained information. For example, the controller 200 compares stored manufacturing information stored in the memory such as the RAM with detected manufacturing information obtained by detecting the information mark pattern 102Y. If there is a difference between the stored manufacturing information and the detected manufacturing information, the controller 200 recognizes that the process cartridge 10Y has been replaced and performs processing for agitating toner contained in the development device 4Y for a predetermined time period. Further, the controller 200 performs processing for modifying an image forming condition, such as a charging bias and a development bias, based on property information of the photoconductor 1Y obtained by detecting the information mark pattern 102Y. Moreover, the controller 200 checks whether or not the process cartridge 10Y is erroneously set based on toner color information. When the process cartridge 10Y is erroneously set, the controller 200 notifies a user of the image forming apparatus 100 (depicted in FIG. 1) the erroneous set by issuing an alarm or displaying the erroneous set on the control panel of the image forming apparatus 100. After the controller 200 performs the above-described processing, the controller 200 clears the open flag in step S6.

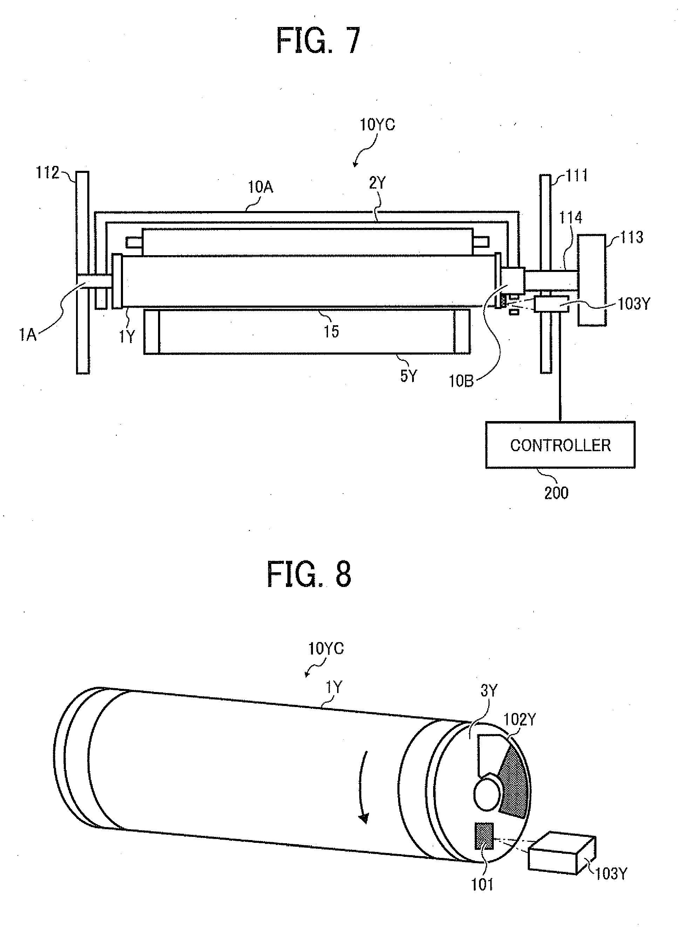

FIG. 7 is a sectional view of a process cartridge 10YC according to yet another exemplary embodiment. FIG. 8 is a perspective view of the process cartridge 10YC. As illustrated in FIG. 8, the process cartridge 10YC includes a flange 3Y. The other elements of the process cartridge 10YC are common to the process cartridge 10Y depicted in FIG. 2.

The information mark pattern 102Y is formed in the flange 3Y provided on one side of the photoconductor 1Y. The optical sensor 103Y faces and detects the information mark pattern 102Y. The reference mark 101 is provided separately from the information mark pattern 102Y, so that the optical sensor 103Y detects a rotation position of the photoconductor 1Y. The reference mark 101 decreases color shift due to change in rotating speed of the photoconductor 1Y.

The following describes the reference mark 101. As illustrated in FIG. 1, in a tandem type image forming apparatus, such as the image forming apparatus 100, a plurality of photoconductors 1Y, 1C, 1M, and 1K form yellow, cyan, magenta, and black toner images, respectively, and the yellow, cyan, magenta, and black toner images are transferred and superimposed onto the intermediate transfer belt 15 to form a color toner image. Therefore, when the yellow, cyan, magenta, and black toner images are not superimposed on the intermediate transfer belt 15 precisely, color shift, in which the yellow, cyan, magenta, and black toner images are shifted from each other, may occur. For example, as illustrated in FIG. 7, color shift may occur when the driving gear 113, which is decentered or molded with a decreased precision, and the joint 10B connected to the driving shaft 114 change a rotating speed of the photoconductor 1Y in which one rotation of the photoconductor 1Y is defined as one cycle. For example, when the driving gear 113 is decentered, a surface speed of the photoconductor 1Y periodically changes, resulting in periodical enlargement and shrink of the yellow, cyan, magenta, and black toner images transferred onto the intermediate transfer belt 15. Namely, when a phase of cyclic enlargement and shrink is not identical among the yellow, cyan, magenta, and black toner images, the yellow, cyan, magenta, and black toner images are not superimposed on the intermediate transfer belt 15 precisely, causing color shift.

To address this problem, at a predetermined time, for example, when the process cartridge 10YC is replaced, the image forming apparatus 100 (depicted in FIG. 1) executes a mode for detecting change in rotating speed in one rotation of the photoconductor 1Y. Specifically, when the optical sensor 103Y detects the reference mark 101 (depicted in FIG. 8) formed on the photoconductor 1Y, the controller 200 forms a speed detection pattern image in which toner images are arranged at a predetermined pitch. When the speed detection pattern image is transferred onto the intermediate transfer belt 15, an image detection sensor (not shown) detects the toner images of the speed detection pattern image. The controller 200 calculates detection intervals for detecting the toner images to detect change in rotating speed of the photoconductor 1Y.

The change in rotating speed of the photoconductor 1Y is detected by defining a position at which the reference mark 101 opposes the optical sensor 103Y as a base point. The controller 200 also detects change in rotating speed of the photoconductors 1C, 1M, and 1K (depicted in FIG. 1) and calculates a phase difference between the photoconductors 1K and 1M, a phase difference between the photoconductors 1K and 1C, and a phase difference between the photoconductors 1K and 1Y. The controller 200 calculates target stop times for stopping the photoconductors 1C, 1M, and 1K based on the calculated phase differences, so that phases of change in rotating speed of the photoconductors 1Y, 1C, 1M, and 1K are identical with each other. When the optical sensor (not shown) for the photoconductor 1K detects the reference mark 101, the controller 200 stops the photoconductor 1K. When the target stop times calculated based on the calculated phase differences elapse after the optical sensors (not shown) for the photoconductors 1Y, 1C, and 1M detect the reference marks 101, respectively, the controller 200 stops the photoconductors 1Y, 1C, and 1M. The controller 200 controls process driving motors (not shown) to rotate the photoconductors 1Y, 1C, 1M, and 1K simultaneously while the phases of change in rotating speed of the photoconductors 1Y, 1C, 1M, and 1K are identical with each other. Thus, when the yellow, cyan, magenta, and black toner images are superimposed on the intermediate transfer belt 15, phases of a cycle of enlargement and shrink of the yellow, cyan, magenta, and black toner images due to change in rotating speed of the photoconductors 1Y, 1C, 1M, and 1K may be identical with each other, reducing or preventing color shift.

As illustrated in FIG. 1, the above-described exemplary embodiments are applied to the process cartridges 10Y, 10C, 10M, and 10K serving as units, respectively. Alternatively, the above-described exemplary embodiments may be applied to the transfer unit 30 which includes the intermediate transfer belt 15, serving as a rotating member, and is attachable to and detachable from the image forming apparatus 100. In this case, an information mark pattern equivalent to the information mark pattern 102Y depicted in FIG. 3 is formed on a non-image area on the intermediate transfer belt 15. The information mark pattern may include property information of the intermediate transfer belt 15 and property information of the first transfer bias rollers 5Y, 5C, 5M, and 5K. When the transfer unit 30 is replaced, the controller 200 (depicted in FIG. 2) changes a first transfer bias, a second transfer bias, and/or the like based on information obtained by detecting the information mark pattern.

The above-described exemplary embodiments may also be applied to the fixing device 26 which includes the fixing roller 58, serving as a rotating member, and is attachable to and detachable from the image forming apparatus 100. In this case, an information mark pattern equivalent to the information mark pattern 102Y depicted in FIG. 3 is formed on the fixing roller 58 or a pressing roller (not shown). The information mark pattern may indicate a fixing temperature. When the fixing device 26 is replaced, the controller 200 changes a fixing temperature and/or the like based on information obtained by detecting the information mark pattern.

The above-described exemplary embodiments may also be applied to a single photoconductor which serves as a rotating member equivalent to the photoconductor 1Y (depicted in FIG. 3) and is attachable to and detachable from the image forming apparatus 100. In this case, an information mark pattern equivalent to the information mark pattern 102Y depicted in FIG. 3 is formed on the photoconductor. The information mark pattern may include property information of the photoconductor. When the photoconductor is replaced, an optical sensor equivalent to the optical sensor 103Y (depicted in FIG. 3) detects the information mark pattern and obtains the property information of the photoconductor. The controller 200 changes an image forming condition, such as a charging bias and a development bias, based on the obtained property information of the photoconductor.

As illustrated in FIG. 3, according to the above-described exemplary embodiments, an information mark pattern (e.g., the information mark pattern 102Y) is formed on a rotating member (e.g., the photoconductor 1Y) included in a unit (e.g., the process cartridge 10Y). Alternatively, the information mark pattern may be formed on a case of the unit. When the unit is attached to an apparatus (e.g., the image forming apparatus 100 depicted in FIG. 1), an optical sensor (e.g., the optical sensor 103Y) provided at a position opposing the information mark pattern formed on the case of the unit may detect the information mark pattern. When the unit is replaced with new one, the optical sensor may detect the information mark pattern formed on the case of the new unit to obtain information of the new unit.

According to the above-described exemplary embodiments, the optical sensor optically obtains information from the information mark pattern. Alternatively, information may be obtained from the information mark pattern by various methods, such as a magnetic method or an electric method. For example, in the magnetic method, the information mark pattern may be magnetically formed and a magnetic sensor may magnetically detect the information mark pattern.

According to the above-described exemplary embodiments, the image forming apparatus includes the process cartridge serving as a unit attachable to and detachable from the image forming apparatus. The optical sensor, serving as a mark detector, detects the information mark pattern formed in the process cartridge and indicating predetermined information. A controller (e.g., the controller 200 depicted in FIG. 2) obtains the predetermined information detected and sent by the optical sensor. Thus, the controller may obtain information from a print, on which the information mark pattern is printed, adhered to the process cartridge or the information mark pattern drawn in the process cartridge. Namely, the controller may obtain information from the process cartridge at a cost lower than a cost at which the controller obtains information from an IC tag of the process cartridge.

Generally, when a process cartridge is replaced, a charging bias and a development bias are changed based on a detection result obtained by detecting a toner image formed for toner density detection, so as to perform a control for providing stable quality of a toner image. However, when property information of the process cartridge is assigned to an information mark pattern, the control for providing stable quality of a toner image may be performed based on the property information obtained by detecting the information mark pattern. Accordingly, a toner image needs not be formed for toner density detection, easily performing the control for providing stable quality of a toner image. Further, when color information of toner contained in a development device (e.g., the development device 4Y depicted in FIG. 1) is assigned to the information mark pattern, the process cartridge may not be attached erroneously.

As illustrated in FIG. 3, the information mark pattern 102Y is formed on an outer circumferential surface of the photoconductor 1Y. While the photoconductor 1Y rotates at a constant speed, the optical sensor 103Y detects the information mark pattern 102Y. The controller 200 (depicted in FIG. 2) obtains information indicated by the information mark pattern 102Y based on a detection result. Namely, a sensor for detecting a rotation angle of the photoconductor 1Y is not needed because the optical sensor 103Y may also detect a rotation angle of the photoconductor 1Y.

Moreover, after the process cartridge 10Y is replaced, the controller 200 may check whether or not the optical sensor 103Y detects the information mark pattern 102Y at a predetermined time, so as to detect abnormal rotation of the photoconductor 1Y.

The information mark pattern 102Y is provided on a non-image area on the outer circumferential surface of the photoconductor 1Y or an outer surface of the flange 3Y (depicted in FIG. 8) rotatable with the photoconductor 1Y. When the information mark pattern 102Y is provided on an outer side surface of the flange 3Y provided at one side of the photoconductor 1Y as illustrated in FIG. 8, the optical sensor 103Y needs to be provided in parallel to the axial direction of the photoconductor 1Y to face the flange 3Y. Moreover, a detection hole needs to be provided in the frame 10A of the process cartridge 10YC as illustrated in FIG. 7.

When the information mark pattern 102Y is provided on the non-image area on the outer circumferential surface of the photoconductor 1Y as illustrated in FIG. 3 or when the information mark pattern 102Y is provided on an outer circumferential surface of the flange 3Y rotatable with the photoconductor 1Y, the optical sensor 103Y may detect the information mark pattern 102Y through an opening of the frame 10A at which the photoconductor 1Y contacts the intermediate transfer belt 15 as illustrated in FIG. 2. Namely, a detection hole is not needed in the frame 10A, reducing manufacturing costs.

As illustrated in FIGS. 3 and 4, the information mark pattern 102Y is formed with the photoconductive layer 1C of the photoconductor 1Y or 1YA. For example, as illustrated in FIG. 3, a coating may be applied to a part of the photoconductor 1Y to form the information mark pattern 102Y. Alternatively, as illustrated in FIG. 4, a part of the photoconductor 1YA may be the base pipe 1B to form the information mark pattern 102Y. Thus, the information mark pattern 102Y may be formed at low costs.

As illustrated in FIG. 5A, the label 110, on which the information mark pattern 102Y is formed, is adhered to the outer circumferential surface of the photoconductor 1Y. When the information mark pattern 102Y is formed on the photoconductor 1Y by applying a coating to the photoconductor 1Y as illustrated in FIG. 3 or by exposing the base pipe 1B as illustrated in FIG. 4, the information mark pattern 102Y is formed during a manufacturing process of the photoconductor 1Y. Therefore, property information of the charger 2Y (depicted in FIG. 2) may not be assigned to the information mark pattern 102Y. On the contrary, when the information mark pattern 102Y is formed by adhering the label 110 including the information mark pattern 102Y to the outer circumferential surface of the photoconductor 1Y as illustrated in FIG. 5A, the information mark pattern 102Y may be formed in a final stage of the manufacturing process of the photoconductor 1Y. For example, after the process cartridge 10YB is assembled, an optimum image forming condition, such as an optimum charging bias and an optimum development bias, is determined. The information mark pattern 102Y corresponding to the optimum image forming condition is formed on the label 110, and the label 110 is adhered to the photoconductor 1Y. Thus, more useful information may be assigned to the information mark pattern 102Y.

The controller 200 (depicted in FIG. 2) may obtain information indicated by the information mark pattern 102Y based on a number of detected marks, a time period needed for detecting a mark, and an output value output when the optical sensor 103Y detects the information mark pattern 102Y.

As illustrated in FIG. 1, the process cartridge 10Y includes at least one of the photoconductor 1Y serving as an image carrier, the charger 2Y for uniformly charging the photoconductor 1Y, the development device 4Y for developing an electrostatic latent image formed on the photoconductor 1Y, and the cleaner 8Y for removing residual toner remaining on the photoconductor 1Y. Thus, the photoconductor 1Y may be easily replaced with new one. Further, the information mark pattern 102Y (depicted in FIG. 3) may include property information of the process cartridge 10Y as well as property information of the charger 2Y and the development device 4Y.

As illustrated in FIG. 3, the photoconductor 1Y, serving as an image carrier, is attachable to and detachable from the image forming apparatus 100 (depicted in FIG. 1). The information mark pattern 102Y is formed on the photoconductor 1Y and indicates predetermined information. The optical sensor 103Y, which serves as a mark detector and is provided in the image forming apparatus 100, detects the information mark pattern 102Y to obtain the predetermined information from the information mark pattern 102Y. Thus, information of the photoconductor 1Y may be assigned to the information mark pattern 102Y at a cost lower than a cost at which information of the photoconductor 1Y is assigned to a nonvolatile memory.

As illustrated in FIG. 1, at least one of the photoconductor 1Y serving as an image carrier, the charger 2Y, the development device 4Y, and the cleaner 8Y is integrated into the process cartridge 10Y attachable to and detachable from the image forming apparatus 100. As illustrated in FIG. 3, the information mark pattern 102Y is formed on the photoconductor 1Y, and indicates predetermined information to be detected and obtained by the optical sensor 103Y. Thus, information of the process cartridge 10Y may be assigned to the information mark pattern 102Y at a cost lower than a cost at which information of the process cartridge 10Y is assigned to a nonvolatile memory.

As illustrated in FIG. 3, an information mark pattern (e.g., the information mark pattern 102Y) indicating predetermined information is formed in a unit (e.g., the process cartridge 10Y). A mark detector (e.g., the optical sensor 103Y) detects the information mark pattern so that a controller (e.g., the controller 200 depicted in FIG. 2) may obtain information of the unit. The information mark pattern may be formed in the unit by adhering a print, on which the information mark pattern is printed, to an image carrier (e.g., the photoconductor 1Y) or by applying a coating to the image carrier at reduced costs. Thus, the controller may obtain information from the unit at a cost lower than a cost at which the controller obtains information from a nonvolatile memory, such as an IC tag, provided in the unit.

The information mark pattern, from which the mark detector may obtain information, is formed on the image carrier so as to assign information to the image carrier. For example, the information mark pattern is formed by adhering a print, on which the information mark pattern is printed, to the image carrier or by drawing the information mark pattern on the image carrier, so as to assign information to the image carrier. Thus, information may be assigned to the image carrier at a cost lower than a cost at which information is stored in a nonvolatile memory, such as an IC tag.

The information mark pattern, from which the mark detector may obtain information, is formed in a process cartridge (e.g., the process cartridge 10Y) to assign information to the process cartridge. For example, information may be assigned to the process cartridge by adhering a print, on which the information mark pattern is printed, to the process cartridge to form the information mark pattern or by drawing the information mark pattern on the process cartridge. Thus, information may be easily assigned to the process cartridge at a cost lower than a cost at which information is assigned to the process cartridge by storing information into a nonvolatile memory, such as an IC tag.

The present invention has been described above with reference to specific exemplary embodiments. Note that the present invention is not limited to the details of the embodiments described above, but various modifications and enhancements are possible without departing from the spirit and scope of the invention. It is therefore to be understood that the present invention may be practiced otherwise than as specifically described herein. For' example, elements and/or features of different illustrative exemplary embodiments may be combined with each other and/or substituted for each other within the scope of the present invention.

This document claims priority and contains subject matter related to Japanese Patent Application No. 2007-188866, filed on July 19, 2007, in the Japan Patent Office.

## Claims

1. An image forming apparatus (100), **characterized by** comprising:
a unit (10Y; 10C; 10M; 10K; 30; 26) attachable to and detachable from the image forming apparatus and including an information mark pattern (102Y) indicating predetermined information;
a mark detector (103Y) configured to detect the information mark pattern; and
a controller (200) configured to obtain the information indicated by the information mark pattern based on a detection result provided by the mark detector.

2. The image forming apparatus according to claim 1, wherein the unit further comprises a rotating member (1Y; 1C; 1M; 1K; 15; 58) bearing the information mark pattern on a rotation orbit thereof, and
wherein the mark detector detects the information mark pattern while the rotating member rotates at a constant speed.

3. The image forming apparatus according to claim 2, wherein the rotating member includes an image carrier (1Y) configured to carry an image, and the information mark pattern is provided on a non-image area on an outer circumferential surface of the image carrier.

4. The image forming apparatus according to claim 2, wherein the unit further comprises a flange (3Y) configured to rotate with the rotating member, and
wherein the rotating member includes an image carrier (1Y) configured to carry an image, and the information mark pattern is provided on an outer surface of the flange.

5. The image forming apparatus according to claim 3, wherein the image carrier comprises a photoconductive layer (IC) configured to form the information mark pattern.

6. The image forming apparatus according to any one of claims 1 to 5,
wherein the information mark pattern is formed on a label (110) attached to the unit.

7. The image forming apparatus according to any one of claims 1 to 6,
wherein the mark detector includes an optical sensor (103Y), and the detection result provided by the optical sensor includes a number of detected marks, a time period needed for detecting a mark, and an output value output when the optical sensor detects a mark on the information mark pattern.

8. The image forming apparatus according to any one of claims 1 to 6,
wherein the unit includes a process cartridge (10Y) comprising at least one of:
an image carrier (1Y) configured to carry an electrostatic latent image;
a charger (2Y) configured to uniformly charge the image carrier;
a development device (4Y) configured to develop the electrostatic latent image formed on the image carrier with toner; and
a cleaner (8Y) configured to remove residual toner remaining on the image carrier.

9. An image carrier (1Y) attachable to and detachable from an image forming apparatus (100),
the image carrier **characterized by** bearing an information mark pattern (102Y) indicating predetermined information to be detected by a mark detector (103Y) provided in the image forming apparatus.

10. A process cartridge (10Y) attachable to and detachable from an image forming apparatus (100),
the process cartridge comprising at least one of:
an image carrier (1Y) configured to carry an electrostatic latent image;
a charger (2Y) configured to uniformly charge the image carrier;
a development device (4Y) configured to develop the electrostatic latent image formed on the image carrier with toner; and
a cleaner (8Y) configured to remove residual toner remaining on the image carrier,
the process cartridge **characterized by** further comprising an information mark pattern (102Y) indicating predetermined information to be detected by a mark detector (103Y) provided in the image forming apparatus.
